# EUROPEAN PATENT APPLICATION

(11) **EP 4 819 370 A1**
(43) Date of publication of application: **07.10.2026**
(21) Application number: 25909607.1
(22) Date of filing: 23.12.2025
(51) Int. Cl.: H01M 50/586

(54) **SECONDARY BATTERY, BATTERY PACK AND ELECTRIC DEVICE**

(30) Priority: 02.01.2025 CN 202520016051 U
(71) Applicant: Sunwoda Mobility Energy Technology Co., Ltd., Shenzhen, Guangdong 518107 (CN)
(72) Inventor: YUAN, Hao, Shenzhen, Guangdong 518107 (CN); HU, Mingjiang, Shenzhen, Guangdong 518107 (CN); ZHANG, Meng, Shenzhen, Guangdong 518107 (CN); YANG, Wei, Shenzhen, Guangdong 518107 (CN)
(74) Representative: Elzaburu S.L.P.
(86) International application number: PCT/CN2025/144961
(87) International publication number: WO 2026/145176

(57) **Abstract**

The present application discloses a secondary battery, a battery pack and an electrical device. The secondary battery includes a housing, an electrode assembly and a top cover assembly; the housing has an accommodating cavity, and the electrode assembly is disposed in the accommodating cavity; the top cover assembly includes a top cover sheet and a lower insulating member, the top cover sheet is connected to the housing, and covers and seals the accommodating cavity, and the top cover sheet has a first liquid-injection hole. The lower insulating member is connected to a side of the top cover sheet facing the electrode assembly; the lower insulating member includes a body, a side plate and a baffle plate, the body is connected to the top cover sheet, and the body is provided with a second liquid-injection hole being in communication with the first liquid-injection hole. The side plate is connected to a side of the body away from the top cover sheet, the baffle plate is connected with the side plate and is disposed between the second liquid-injection hole and the electrode assembly, the side plate has a liquid outlet which is in communication with the second liquid-injection hole. A flow passage area of the liquid outlet is S₁, and an outer surface area of the side plate is S₂, satisfying: 0.06 ≤ S₁/S₂ ≤ 2. In the present application, the separator folding is prevented and the injection efficiency of the electrolyte is improved.

## Description

The present application claims priority to Chinese patent application No. 202520016051.7, entitled "Secondary Battery, Battery Pack and Electrical Device", and filed with China National Intellectual Property Administration on January 02, 2025, which is hereby incorporated by reference in its entirety.

### TECHNICAL FIELD

The present application relates to the technical field of batteries, and in particular to a secondary battery, a battery pack and an electrical device.

### BACKGROUND

During the production of secondary batteries, electrolyte needs to be injected into the interior of the batteries through a liquid-injection hole. During electrolyte injection, the hydraulic impact force is relatively large, which imposes a strong impact on an electrode assembly inside the battery. This easily causes a separator of the electrode assembly to fold, further resulting in a short circuit inside the battery.

### SUMMARY

The present application provides a secondary battery, which aims to solve the problem that when an electrolyte is injected, the separator is prone to folding, thereby resulting in a short circuit inside the battery. Another objective of an embodiment of the present application is to provide a battery pack. Further objective of an embodiment of the present application is to provide an electrical device.

To solve the above technical problem, the present application is implemented as follows.

In a first aspect, an embodiment of the present application provides a secondary battery, including:
a housing, having an accommodating cavity;
an electrode assembly, disposed in the accommodating cavity; and
a top cover assembly, including:
   a top cover sheet, connected with the housing, and covering and sealing the accommodating cavity, where the top cover sheet has a first liquid-injection hole; and
   a lower insulating member, connected to a side of the top cover sheet facing the electrode assembly; where the lower insulating member includes:
      a body, connected with the top cover sheet, where the body is provided with a second liquid-injection hole being in communication with the first liquid-injection hole;
      a side plate, connected to a side of the body away from the top cover sheet; and
      a baffle plate, connected to a side of the side plate away from the body, where the baffle plate is disposed between the second liquid-injection hole and the electrode assembly, the side plate has a liquid outlet, and the liquid outlet is in communication with the second liquid-injection hole;
      where a flow passage area of the liquid outlet is S₁ mm², and an outer surface area of the side plate is S₂ mm², satisfying 0.06 ≤ S₁/S₂ ≤ 2.

In some embodiments, the flow passage area of the liquid outlet and the outer surface area of the side plate satisfy: 0.2 ≤ S₁/S₂ ≤ 0.4.

In some embodiments, the flow passage area of the liquid outlet satisfies: 12 ≤ S₁ ≤ 100; and/or,
the outer surface area of the side plate satisfies: 50 ≤ S₂ ≤ 200.

In some embodiments, the flow passage area of the liquid outlet satisfies: 20 ≤ S₁ ≤ 60; and/or,
the outer surface area of the side plate satisfies: 50 ≤ S₂ ≤ 150.

In some embodiments, the secondary battery has a first direction, and the electrode assembly and the top cover assembly are arranged along the first direction; the electrode assembly includes a winding core and a tab, the tab and the winding core are electrically connected, and the tab is disposed on a side of the winding core facing the top cover sheet; a cavity is enclosed by the baffle plate and the side plate, and the cavity is communicated with the liquid outlet and the second liquid-injection hole respectively; along the first direction, a maximum size of the cavity is H₁ mm, and a distance between a side of the top cover sheet adjacent to the lower insulating member and a side of the winding core adjacent to the lower insulating member is H₂ mm, satisfying 0.14 ≤ H₁/H₂ ≤ 2.5.

In some embodiments, the maximum size of the cavity satisfies: 1 ≤ H₁ ≤ 5; and/or,
the distance between the side of the top cover sheet adjacent to the lower insulating member and the side of the winding core adjacent to the lower insulating member satisfies: 2 ≤ H₂ ≤ 7.

In some embodiments, along the first direction, a maximum size of the baffle plate is H₃ mm, satisfying: 0.5 ≤ H₃ ≤ 0.7.

In some embodiments, the maximum size of the cavity, the distance between the side of the top cover sheet adjacent to the lower insulating member and the side of the winding core adjacent to the lower insulating member, and the maximum size of the baffle plate further satisfy: H₁+H₃ ≤ H₂.

In some embodiments, the secondary battery has a second direction intersecting with the first direction; the top cover assembly further includes a terminal post, and a part of the terminal post protrudes from the side of the body away from the top cover sheet; the lower insulating member further includes an explosion-proof valve boss, and the explosion-proof valve boss is connected to the side of the body away from the top cover sheet; along the second direction, the side plate is disposed between the explosion-proof valve boss and the terminal post, and the liquid outlet is disposed towards the terminal post or the explosion-proof valve boss.

In some embodiments, the secondary battery has a third direction intersecting with the first direction and the second direction respectively; the tab is electrically connected to the terminal post; and along the third direction, the tab is disposed on a side of the side plate away from the cavity.

In some embodiments, the side plate has a plurality of liquid outlets, and the plurality of liquid outlets are disposed at intervals along a circumferential direction of the side plate; along the first direction, the liquid outlet penetrates the side plate.

In some embodiments, the side plate has two liquid outlets, one of the two liquid outlets is disposed towards the terminal post, and the other of the two liquid outlets is disposed towards the explosion-proof valve boss.

In some embodiments, a side surface of the baffle plate facing the second liquid-injection hole is one of a flat surface, an arc surface protruding towards the second liquid-injection hole, and a conical surface protruding towards the second liquid-injection hole.

In a second aspect, an embodiment of the present application provides a battery pack, including the secondary battery as described in any one of the preceding embodiments.

In a third aspect, an embodiment of the present application provides an electrical device, including the secondary battery as described in any one of the preceding embodiments, or the battery pack as described in the preceding embodiment.

Beneficial effect: the secondary battery according to the embodiment of the present application includes the housing, the electrode assembly and the top cover assembly. The housing has the accommodating cavity, and the electrode assembly is disposed in the accommodating cavity. The top cover assembly includes the top cover sheet and the lower insulating member, the top cover sheet is connected to the housing, and covers and seals the accommodating cavity, and the top cover sheet has the first liquid-injection hole. The lower insulating member is connected to the side of the top cover sheet facing the electrode assembly. The lower insulating member includes the body, the side plate and the baffle plate, the body is connected to the top cover sheet, and the body is provided with the second liquid-injection hole being in communication with the first liquid-injection hole. The side plate is connected to the side of the body away from the top cover sheet, and the baffle plate is connected to the side plate away from the body, and the baffle plate is disposed between the second liquid-injection hole and the electrode assembly to separate the second liquid-injection hole and the electrode assembly. The side plate has the liquid outlet, and the liquid outlet is in communication with the second liquid-injection hole. The flow passage area of the liquid outlet is S₁ mm², and the outer surface area of the side plate is S₂ mm², satisfying 0.06 ≤ S₁/S₂ ≤ 2.

In the embodiment of the present application, by providing that the side plate is connected with the baffle plate and the body, and the side plate is provided with the liquid outlet, the baffle plate is disposed opposite to the second liquid-injection hole, so that the baffle plate is disposed between the second liquid-injection hole and the electrode assembly to separate the second liquid-injection hole and the electrode assembly. During the electrolyte injection, the electrolyte can be blocked, so as to prevent the high-pressure electrolyte passing through the second liquid-injection hole from directly impacting the electrode assembly to cause separator folding, thereby improving the production qualification rate of the secondary battery. In addition, in the present application, by providing a ratio of the flow passage area of the liquid outlet to the outer surface area of the side plate to be within the range of 0.06 ≤ S₁/S₂ ≤ 2, a relatively high injection rate can be ensured, thereby improving the injection efficiency of the electrolyte, and facilitating enhancing the production efficiency of the secondary battery.

The battery pack according to the embodiment of the present application includes the secondary battery as described in any one of the preceding embodiments. It can be understood that the battery pack according to the embodiment of the present application includes all the technical features and all the technical effects of the aforementioned secondary battery, which will not be repeated herein.

The electrical device according to the embodiment of the present application includes the secondary battery as described in any one of the aforementioned embodiments, or the battery pack as described in the aforementioned embodiment. It can be understood that the electrical device according to the embodiment of the present application includes all the technical features and all the technical effects of the aforementioned secondary battery or battery pack, which will not be repeated herein.

### BRIEF DESCRIPTION OF DRAWINGS

In order to illustrate the technical solutions in the embodiments of the present application more clearly, the accompanying drawings required for describing the embodiments will be briefly introduced hereinafter. Apparently, the accompanying drawings in the following description are merely some embodiments of the present application, and for those skilled in the art, other accompanying drawings can also be obtained based on these accompanying drawings without creative labor.
FIG. 1 is a schematic diagram showing an overall structure of a secondary battery in an embodiment of the present application.
FIG. 2 is an explosion view showing a secondary battery in an embodiment of the present application.
FIG. 3 is a cross-sectional view showing a secondary battery along a first direction and a third direction in an embodiment of the present application.
FIG. 4 shows an enlarged view of Part A in FIG. 3.
FIG. 5 is a schematic structural diagram showing a top cover assembly of a secondary battery in an embodiment of the present application.
FIG. 6 is a cross-sectional view showing a secondary battery along the first direction and a second direction in an embodiment of the present application.
FIG. 7 shows an enlarged view of Part B in FIG. 6.
FIG. 8 is a cross-sectional view showing a secondary battery along the second direction and the third direction in an embodiment of the present application.

### Reference signs:

1 - Housing; 11 - Accommodating cavity; 2 - Electrode assembly; 21 - Tab; 22 - Winding core; 3 - Top cover assembly; 31 - Top cover sheet; 311 - First liquid-injection hole; 32 - Lower insulating member; 321 - Body; 3211 - Second liquid-injection hole; 322 - Side plate; 3221 - Liquid outlet; 323 - Baffle plate; 324 - Cavity; 325 - Explosion-proof valve boss; 33 - Terminal post; Z - First direction; X - Second direction; Y - Third direction.

### DESCRIPTION OF EMBODIMENTS

The technical solutions in the embodiments of the present application will be clearly and completely described hereinafter with reference to the accompanying drawings in the embodiments of the present application. Apparently, the described embodiments are merely some of, not all of, the embodiments of the present application. Based on the embodiments in the present application, all other embodiments obtained by those skilled in the art without creative labor fall within the protection scope of the present application.

In the description of the present application, it should be understood that the orientation or position relationship indicated by the terms "length", "width", "thickness", "upper", "lower", "front", "back", "left", "right", "top", "bottom", "inside", "outside", etc. is based on an orientation or position relationship shown in the accompanying drawings, and is merely for the convenience of describing the present application and simplifying the description, and is not intended to indicate or imply that the referred device or member has a specific orientation, and is constructed and operated in a specific orientation. Therefore, they shall not be construed as limiting the present application. In addition, the terms "first" and "second" are merely used for the purpose of description and cannot be construed as indicating or implying relative importance or implying the number of the indicated technical features. Therefore, the feature defined by the term "first" or "second" may explicitly or implicitly include one or more features. In the description of the present application, the term "a plurality of" refers to two or more, and the term "at least one" can refer to one, two or more, unless otherwise expressly and specifically defined. In the description of the present application, the term "perpendicular" refers to completely perpendicular at an angle of 90° or almost completely perpendicular. For example, any included angle in a range of 80° to 100° shall be deemed as perpendicular. Similarly, the term "parallel" refers to completely parallel or almost completely parallel. For example, any included angle within a range of 10° from a completely parallel state shall be deemed as parallel.

It should also be noted that in the accompanying drawings of the present application, the arrow marked by Z is configured to indicate a first direction Z, the arrow marked by X is configured to indicate a second direction X, and the arrow marked by Y is configured to indicate a third direction Y. The introduction of the first direction Z, the second direction X, and the third direction Y is to facilitate the description of the structural and positional relationship of the secondary battery, so as to facilitate the understanding of the structure thereof. In the embodiments of the present application, the first direction Z refers to a height direction of the secondary battery, the second direction X refers to a length direction of the secondary battery, and the third direction Y refers to a width direction of the secondary battery. The first direction Z, the second direction X and the third direction Z intersect with each other; and further, the first direction Z, the second direction X and the third direction Y are perpendicular to each other.

In the technical field of power batteries, during the production process of secondary batteries, it is generally required to inject electrolyte into an interior of the secondary battery through a liquid-injection hole arranged in a top cover assembly of the secondary battery. As the injection efficiency of the electrolyte increases, the production efficiency of the battery is enhanced. However, in the current production process of the battery, in order to improve the injection efficiency, the pressure during the electrolyte injection process is generally high, which tends to impact the separator of the electrode assembly, causing the separator to fold. However, when the injection pressure is reduced, the injection efficiency of the electrolyte will be lowered.

By view of this, the embodiments of the present application provide a secondary battery, a battery pack and an electrical device, designed to solve the above problems.

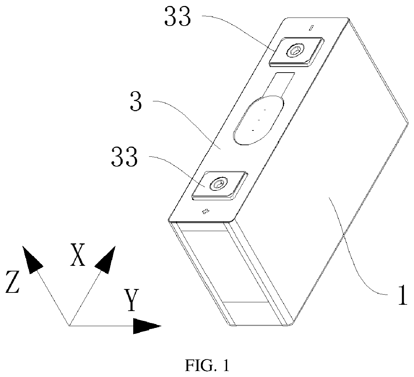

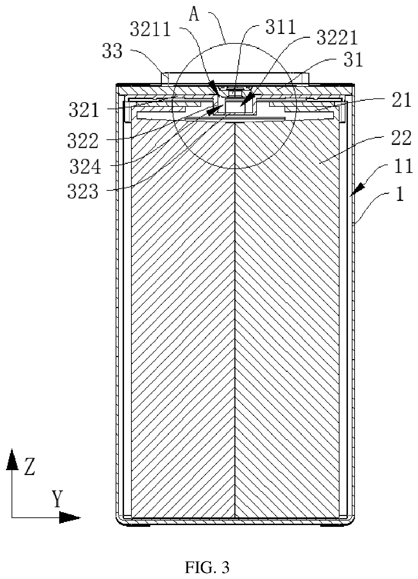

Please referring to FIG. 1 to FIG. 5, the embodiments of the present application provide a secondary battery, including a housing 1, an electrode assembly 2 and a top cover assembly 3; the housing 1 has an accommodating cavity 11, the electrode assembly 2 is disposed in the accommodating cavity 11, the top cover assembly 3 includes a top cover sheet 31 and a lower insulating member 32, the top cover sheet 31 is connected to the housing 1, and covers and seals the accommodating cavity 11, and the top cover sheet 31 has a first liquid-injection hole 311.

The lower insulating member 32 is disposed between the top cover sheet 31 and the electrode assembly 2, and the lower insulating member 32 is connected with the top cover sheet 31. The lower insulating member 32 includes a body 321, a side plate 322 and a baffle plate 323. The body 321 is connected with the top cover sheet 31, and the body 321 is provided with a second liquid-injection hole 3211 communicated with the first liquid-injection hole 311. The side plate 322 is disposed on a side of the body 321 away from the top cover sheet 31 and connected with the body 321, and the baffle plate 323 is connected to a side of the side plate 322 away from the body 321; the baffle plate 323 is disposed between the second liquid-injection hole 3211 and the electrode assembly 2 to separate the second liquid-injection hole 3211 and the electrode assembly 2; the side plate 322 has an liquid outlet 3221, and the liquid outlet 3221 is in communication with the second liquid-injection hole 3211, where the liquid outlet 3221 has a flow passage area of S₁ mm², and the side plate 322 has an outer surface area of S₂ mm², satisfying: 0.06 ≤ S₁/S₂ ≤ 2.

In the embodiments of the present application, by providing that the side plate 322 is connected with the baffle plate 323 and the side plate 322 is provided with the liquid outlet 3221, the baffle plate 323 is disposed opposite to the second liquid-injection hole 3211, so that the baffle plate 323 is disposed between the second liquid-injection hole 3211 and the electrode assembly 2. During electrolyte injection, the electrolyte can be blocked, so as to prevent the high-pressure electrolyte passing through the second liquid-injection hole 3211 from directly impacting the electrode assembly 2 to cause separator folding, thereby improving the production qualification rate of the secondary battery. In addition, in the present application, by providing a ratio of the flow passage area of the liquid outlet 3221 to the outer surface area of the side plate 322 to be within the range of 0.06 ≤ S₁/S₂ ≤ 2, a relatively high injection efficiency can be ensured, so as to improve the injection efficiency of the electrolyte, thereby enhancing the production efficiency of the secondary battery.

Specifically, in the embodiments of the present application, the body 321 and the top cover sheet 31 are stacked along a first direction Z. By providing the second liquid-injection hole 3211 in the body 321, a part of a hole wall of the first liquid-injection hole 311 in the top cover sheet 31 extends into the second liquid-injection hole 3211, so that an injection nozzle for the electrolyte can be directly inserted into the first liquid-injection hole 311, and the hole wall of the first liquid-injection hole 311 is partially disposed in the second liquid-injection hole 3211. In this way, the electrolyte can be injected into the second liquid-injection hole 3211; and the second liquid-injection hole 3211 is in communication with the accommodating cavity 11 of the housing 1, so that the electrolyte can be smoothly injected into the accommodating cavity 11 through the second liquid-injection hole 3211.

In the present application, the side plate 322 is connected with the baffle plate 323. The side plate 322 is disposed around a peripheral side of the second liquid-injection hole 3211, and then the baffle plate 323 is connected with the side plate 322, so that the baffle plate 323 is disposed opposite to the second liquid-injection hole 3211. At this point, the baffle plate 323 can be disposed between the second liquid-injection hole 3211 and the electrode assembly 2 to separate the second liquid-injection hole 3211 and the electrode assembly 2, effectively blocking the electrolyte from directly impacting the electrode assembly 2. The electrode assembly 2 is formed by stacking and then winding a separator, a positive electrode sheet, a separator and a negative electrode sheet, and a separator, the separator is relatively soft, and the side face of the laminate formed by the separators, the positive electrode sheet and the negative electrode sheet faces the second liquid-injection hole 3211. Therefore, without the baffle plate 323, the high-pressure electrolyte will directly impact on the electrode assembly 2, and can directly strike between the separator, the positive electrode sheet and the negative electrode sheet, causing gaps to occur between the separator and the positive electrode sheet or the negative electrode sheet.

During the continuous electrolyte injection, there is a phenomenon that the separator may be flushed into the gap between adjacent positive electrode sheet and negative electrode sheet, causing the separator to fold. At this time, there will be a dangerous short-circuit situation caused by that parts of the positive electrode sheet and the negative electrode sheet are lapjoined on both sides of the folded separator. In the present application, by providing the baffle plate 323 to block the electrolyte, the separator of the electrode assembly 2 is effectively protected from folding, thereby effectively reducing a possibility of a short circuit in the electrode assembly 2 and improving the safety of the secondary battery.

It can be understood that, in the present application, by providing the side plate 322 and the baffle plate 323, a relatively high hydraulic impact can be withstood during the electrolyte injection, which is conducive to ensuring a relatively high injection rate of the electrolyte. Meanwhile, in order to ensure that the electrolyte can be smoothly injected into the accommodating cavity 11, the flow passage area of the liquid outlet 3221 can be reasonably controlled, so that the injection rate of the electrolyte into the accommodating cavity 11 can be increased, thereby improving the overall injection efficiency of the electrolyte. Specifically, the side plate 322 is disposed around the second liquid-injection hole 3211. Therefore, by controlling the ratio relationship between the flow passage area of the liquid outlet 3221 and the remaining outer surface of the side plate 322, the liquid injection rate of the secondary battery can be controlled accordingly, and then the injection efficiency of the electrolyte can be controlled. In the present application, by setting the flow passage area of the liquid outlet 3221 to be S₁ mm² and the outer surface area of the side plate 322 to be S₂ mm², and satisfying: 0.06 ≤ S₁/S₂ ≤ 2, the injection efficiency can be enhanced while the separator folding is prevented.

It should be noted that, in the embodiments of the present application, the flow passage area of the liquid outlet 3221 is controlled to S₁ mm², for controlling the injection flow rate of the electrolyte. When the value of S₁ is larger, the area of the side plate 322 blocking the electrolyte is correspondingly smaller, so that the injection rate of the electrolyte will be enhanced, and the injection efficiency of the secondary battery will further be correspondingly improved. The liquid outlet 3221 is provided in the side plate 322. Therefore, when a circumferential size of the side plate 322 remains unchanged and a size thereof along the first direction Z remains unchanged, as the flow passage area of the liquid-injection hole increases, the remaining outer surface area of the side plate 322 decreases correspondingly. At this moment, the ratio of S₁/S₂ also increases accordingly.

Therefore, in the embodiments of the present application, as the ratio of S₁/S₂ increases, the liquid injection rate increases and the liquid injection efficiency further increases accordingly while ensuring that the separator bending is prevented. However, when the ratio of S₁/S₂ is excessively large, for example, S₁/S₂>2, the connecting and supporting effect of the side plate 322 to the baffle plate 323 will be deteriorated accordingly; and when the baffle plate 323 does not abut against the electrode assembly 2, there will be a risk of fracture of the side plate 322 when the high-pressure electrolyte is injected. In this case, the baffle plate 323 will fail to block the electrolyte as the electrolyte flows, bringing a risk of separator folding to the electrode assembly 2.

When the ratio of S₁/S₂ is excessively low, for example, S₁/S₂<0.06, the flow passage area of the liquid outlet 3221 is excessively small relative to the outer surface area of the side plate 322, so that the flow rate of the electrolyte flowing out of the liquid outlet 3221 is relatively low, which is not conducive to improving the injection efficiency of the electrolyte. Therefore, in the embodiments of the present application, by providing that the flow passage area of the liquid outlet 3221 is S₁ mm², and the outer surface area of the side plate 322 is S₂ mm², and satisfying: 0.06 ≤ S₁/S₂ ≤ 2, it is ensured that the secondary battery has a high injection efficiency on the basis of preventing the separator bending. The value of S₁/S₂ can be any one of 0.06, 0.1, 0.13, 0.2, 0.3, 0.4, 0.5, 0.6, 0.7, 0.8, 0.9, 1, 1.1, 1.2, 1.3, 1.4, 1.5, 1.6, 1.7, 1.8, 1.9, and 2, or a range between any two of them.

When the flow passage area of the liquid outlet 3221 and the outer surface area of the side plate 322 satisfy the range of 0.06 ≤ S₁/S₂ ≤ 2, the electrolyte injected can be blocked by the baffle plate 323 in the secondary battery, avoiding the separator folding. Meanwhile, the flow passage area of the liquid outlet 3221 is within a reasonable range, which can ensure a relatively high injection efficiency of the electrolyte, and meanwhile ensure the structural strength of the side plate 322 and ensure the fixing stability of the baffle plate 323.

Further, in some embodiments, the flow passage area of the liquid outlet 3221 and the outer surface area of the side plate 322 satisfy: 0.2 ≤ S₁/S₂ ≤ 0.4.

In the embodiments of the present application, the ratio of the flow passage area of the liquid outlet 3221 to the outer surface area of the side plate 322 is controlled within the range of 0.2 ≤ S₁/S₂ ≤ 0.4. At this point, the flow passage area (i.e., the opening area) of the liquid outlet 3221 can be provided more reasonably, and the outer surface area of the side plate 322 can be further controlled to be twice the flow passage area of the liquid outlet 3221 or more, so that the structural strength of the side plate 322 can be further ensured while ensuring the relatively high injection efficiency of the secondary battery. Meanwhile, this ensures that the side plate 322 has a relatively large surface area, which can block and disturb the electrolyte from the lateral side of the injection direction of the electrolyte, so as to realize the directional inflow of the electrolyte and better control the outflow direction of electrolyte.

Further, in some embodiments, the flow passage area of the liquid outlet 3221 satisfies: 12 ≤ S₁ ≤ 100; and/or, the outer surface area of the side plate 322 satisfies: 50 ≤ S₂ ≤ 200.

In the embodiments of the present application, the value of S₁ may be any one of 12, 15, 18, 20, 25, 30, 30.6, 35, 40, 45, 48, 50, 55, 60, 65, 70, 75, 80, 85, 90, and 100, or a range between any two of them. The value of S₂ may be any one of 50, 55, 60, 65, 70, 77, 80, 90, 100, 110, 120, 124, 130, 140, 150, 160, 170, 180, 190, and 200, or a range between any two of them. At this moment, this can not only satisfy the higher injection efficiency of the secondary battery, but also ensure the strength and stability of the connection structure between the baffle plate 323 and the side plate 322. As the value of S₁ gradually increases, the corresponding injection efficiency increases. As the value of S₂ gradually decreases, the corresponding injection efficiency increases.

Further, in some embodiments, the flow passage area of the liquid outlet 3221 satisfies: 20 ≤ S₁ ≤ 60; and/or, the outer surface area of the side plate 322 satisfies: 50 ≤ S₂ ≤ 150.

In the embodiments of the present application, based on the size of the secondary battery, the values of S₁ and S₂ are reasonably set, so that a better balance between the injection efficiency and the structural strength can be achieved. When the flow passage area S₁ of the liquid outlet 3221 satisfies: 20 ≤ S₁ ≤ 60; and/or, the outer surface area S₂ of the side plate 322 satisfies: 50 ≤ S₂ ≤ 150, it is ensured that the flow passage area of the liquid outlet 3221 falls within a more preferred range. In addition, the outer surface area of the side plate 322 is in a more preferred range, which also ensures that the ratio of S₁/S₂ falls within a preferred range. That is, it can be realized that the high-pressure electrolyte is blocked, preventing the separator folding during the liquid injection, and achieving higher injection efficiency.

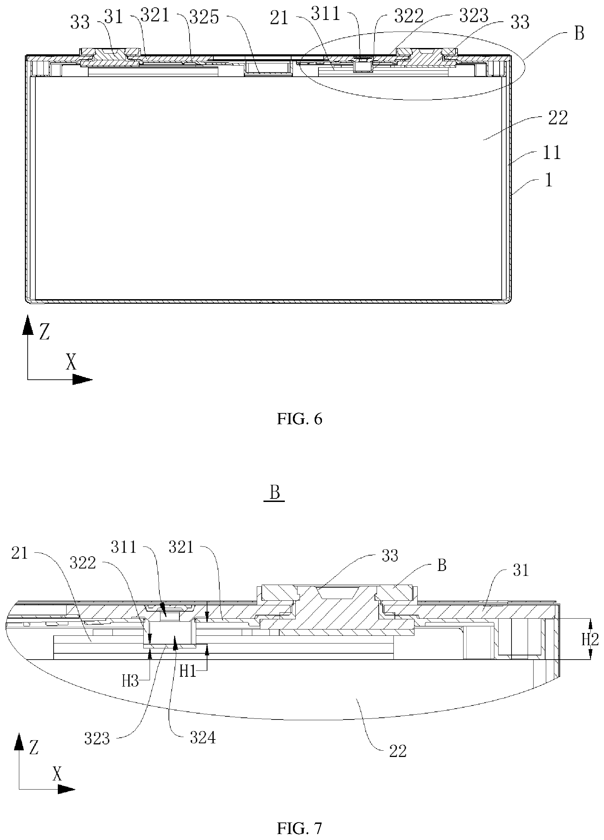

It should be noted that in the embodiments of the present application, the flow passage area of the liquid outlet 3221 is a total area of one or more liquid outlets 3221. When the flow passage area of the liquid outlet 3221 or the outer surface area of the side plate 322 is an area of a regular shape (such as square, round, oval, ring, etc.), they can be measured and calculated by conventional area measurement methods. For the flow passage area of the liquid outlet 3221 or the outer surface area of the side plate 322 being an area of an irregular shape, they can be measured and calculated by a covering-film method. That is to say, a covering-film with uniform quality is attached to the part corresponding to the liquid outlet 3221 of the side plate 322, the covering-film that is attached to the corresponding liquid outlet 3221 is removed, and the quality of the covering-film is determined; and the area of the liquid outlet 3221 measured is determined as the quotient obtained by dividing the mass of the removed covering-film by the predetermined mass per unit area of the covering-film. Correspondingly, a covering-film with uniform quality is attached to the part corresponding to the outer surface of the side plate 322, the covering-film is removed, and the quality of the covering-film is determined; the outer surface area of the side plate 322 measured is determined as the quotient obtained by dividing the mass of the removed covering-film by the predetermined mass per unit area of the covering-film. In some embodiments, as shown in FIG. 6 and FIG. 7, the secondary battery has the first direction Z, and the electrode assembly 2 and the top cover assembly 3 are arranged along the first direction Z. The electrode assembly 2 includes a winding core 22 and a tab 21, the tab 21 is electrically connected to the winding core 22, and the tab 21 is disposed on a side of the winding core 22 facing the top cover sheet 31. A cavity 324 is enclosed by the baffle plate 323 and the side plate 322, and the cavity 324 is in communication with the second liquid-injection hole 3211 and the liquid outlet 3221 respectively. Along the first direction Z, a maximum size of the cavity 324 is H₁ mm, and a distance between a side of the top cover sheet 31 adjacent to the lower insulating member 32 and a side of the winding core 22 adjacent to the lower insulating member 32 is H₂ mm, satisfying: 0.1 ≤ H₁/H₂ ≤ 2.5.

In the embodiments of the present application, the cavity 324 is configured to accommodate the electrolyte injected from the liquid-injection hole, and the electrolyte is buffered and redirected to prevent the electrolyte from impacting and damaging to the interior structure of the battery. For example, changing the flow direction of the electrolyte can effectively prevent the separator folding. The gap between the top cover sheet 31 and the winding core 22, that is located between the side of the top cover sheet 31 adjacent to the lower insulating member 32 and the side of the winding core 22 adjacent to the lower insulating member 32, is configured to accommodate the lower insulating member 32.

Certainly, in order to ensure the stability of the electrode assembly 2 in the accommodating cavity 11, the lower insulating member 32 is generally disposed to abut against the side of the top cover sheet 31 facing the lower insulating member 32 and the side of the winding core 22 facing the lower insulating member 32, respectively. In the embodiments of the present application, along the first direction Z, it is provided that the maximum size of the cavity 324 is H₁ mm, and the distance between the side of the top cover sheet 31 adjacent to the lower insulating member 32 and the side of the winding core 22 adjacent to the lower insulating member 32 is H₂ mm, satisfying: 0.1 ≤ H₁/H₂ ≤ 2.5. In this case, it can ensure that the cavity 324 has a sufficient size, so as to ensure that the cavity provides sufficient buffer space for the electrolyte and the space to change direction, thereby improving the injection efficiency.

It can be understood that the side plate 322 and the baffle plate 323 are connected to enclose the cavity 324, the electrolyte enters the cavity 324 preferentially through the second liquid-injection hole 3211, and the cavity 324 is utilized to buffer the electrolyte. At this moment, the side plate 322 cooperates with the baffle plate 323, the baffle plate 323 is utilized to reduce the impact of the electrolyte on the electrode assembly 2 along the first direction Z, and the side plate 322 is utilized to locally block and disturb the flow of the electrolyte from the peripheral side of the cavity 324. The liquid outlet 3221 in the side plate 322 is in communication with the cavity 324 and the accommodating cavity 11, realizing that the electrolyte flows out of the liquid outlet 3221 and enters the accommodating cavity 11. An opening direction of the liquid outlet 3221 can be set as required, so as to effectively reduce the impact of the electrolyte on the electrode assembly 2 and improve the safety and qualification rate of the secondary battery production.

It should be noted that, in the embodiments of the present application, the numerical range of H₁/H₂ may be any one of 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, and 2.5, or a range between any two of them.

When 0.1 ≤ H₁/H₂ ≤ 2.5, this ensures that the electrolyte is blocked by the baffle plate 323 to prevent the separator folding, meanwhile there is a sufficient gap between the baffle plate 323 and the second liquid-injection hole 3211. In this way, after the electrolyte is injected into the cavity 324 through the second liquid-injection hole 3211 and finally impacts on the baffle plate 323, there is sufficient space for the electrolyte to flow toward the liquid outlet 3221, so as to achieve fast and efficient liquid injection and protect the electrode assembly 2.

As the value of H₁/H₂ increases, the effect of the cavity 324 in buffering the flow rate of the electrolyte and changing its flow direction become better, facilitating the faster injection of the electrolyte and improving the injection efficiency of the electrolyte. When 1 ≤ H₁/H₂ ≤ 2.5, the baffle plate 323 abuts against a side of the winding core 22 facing the body 321, causing a certain bending deformation of the winding core 22. In this case, the sealed assembly and connection between the top cover sheet 31 and the housing 1 can still be realized, and better injection efficiency can also be ensured.

When H₁/H₂ < 0.1, the size of the cavity 324 is small relative to the distance between the top cover sheet 31 and the winding core 22, and correspondingly the distance between the baffle plate 323 and the second liquid-injection hole 3211 is also relatively small. In this case, when the electrolyte is injected, the baffle plate 323 provides a relatively large resistance to the electrolyte, which correspondingly will affect the injection efficiency of the electrolyte. When H₁/H₂ > 2.5, although the size of the cavity 324 is relatively large, the baffle plate 323 continues to squeeze the winding core 22, and the un-squeezed region of the winding core 22 may partially block the liquid outlet 3221, thereby affecting the outflow rate of the electrolyte.

Therefore, in the embodiments of the present application, preferably, along the first direction Z, the maximum size of the cavity 324 is H₁ mm, and the distance between the side of the top cover sheet 31 adjacent to the lower insulating member 32 and the side of the winding core 22 adjacent to the lower insulating member 32 is H₂ mm, satisfying: 0.1 ≤ H₁/H₂ ≤ 2.5.

It should be noted that when 1 ≤ H₁/H₂ ≤ 2.5, the baffle plate 323 and the side plate 322 may partially fall into the winding core 22; specifically, the baffle plate 323 may bend part of the separator and the electrode sheet of the winding core 22. In this case, the liquid outlet may also be partially located between the separators, which allows the injection of the electrolyte. In addition, since both of the baffle plate 323 and the side plate 322 are part of the lower insulating member 32, the baffle plate 323 and the side plate 322 are also electrically insulating, which will not cause a short circuit inside the electrode assembly 2.

It should further be noted that in the embodiments of the present application, the dimension of H₁ and H₂ can be measured by a length-measuring tool such as a ruler, a vernier caliper, or a micrometer.

In some preferred embodiments of the present application, the maximum size of the cavity 324 satisfies: 1 ≤ H₁ ≤ 5; and/or, the distance between the side of the top cover sheet 31 adjacent to the lower insulating member 32 and the side of the winding core 22 adjacent to the lower insulating member 32 satisfies: 2 ≤ H₂ ≤ 7.

In some embodiments, along the first direction Z, the maximum size of the baffle plate 323 is H₃ mm, satisfying: 0.5 ≤ H₃ ≤ 0.7.

In the embodiments of the present application, by providing the maximum size H₃ of the baffle plate 323 along the first direction Z to satisfy 0.5 ≤ H₃ ≤ 0.7, it is avoided that the baffle plate 323 excessively occupies the dimension of the lower insulating member 32 along the first direction Z. This allows the cavity 324 to have a larger size along the first direction Z, thereby ensuring a relatively high injection efficiency of the electrolyte.

It should be noted that in the embodiments of the present application, the numerical value of the maximum size H₃ of the baffle plate 323 along the first direction Z may be any one of 0.5, 0.51, 0.52, 0.53, 0.54, 0.55, 0.56, 0.57, 0.58, 0.59, 0.6, 0.61, 0.62, 0.63, 0.64, 0.65, 0.66, 0.67, 0.68, 0.69, and 0.7, or a range between any two of them.

When 0.5 ≤ H₃ ≤ 0.7, the baffle plate 323 can not only have a certain structural strength to avoid its fracture under the impact of the high-pressure electrolyte, but also reduce the dimension occupation along the first direction Z, providing sufficient dimension space for arranging the cavity 324 and thus facilitating high injection efficiency. When H₃<0.5, the baffle plate 323 is relatively thin, and the corresponding structural strength thereof is reduced. When H₃> 0.7, the baffle plate 323 will occupy the dimension along the first direction Z, causing dimensional compression of the cavity 324. Therefore, preferably, the maximum size H₃ of the baffle plate 323 along the first direction Z satisfies 0.5 ≤ H₃ ≤ 0.7.

In some embodiments, the maximum size of the cavity 324 and the maximum size of the baffle plate 323 satisfy: 1.5 ≤ H₁+H₃ ≤ 5.5.

In the embodiments of the present application, the maximum size of the cavity 324 and the maximum size of the baffle plate 323 are provided to satisfy: 1.5 ≤ H₁+H₃ ≤ 5.5. In this case, this can ensure that a dimension between the side of the baffle plate 323 away from the cavity 324 and the side of the body 321 facing the electrode assembly 2 falls within a reasonable range, to prevent the baffle plate 323 from excessively squeezing the winding core 22 due to the baffle plate 323 being excessively far away from the body 321.

It should be noted that in the embodiments of the present application, the numerical value of H₁+H₃ may be any one of 1.5, 1.6, 1.7, 1.8, 1.9, 2, 2.1, 2.2, 2.3, 2.4, 2.5, 2.6, 2.7, 2.8, 2.9, 3, 3.2, 3.5, 3.8, 4, 4.5, 4.8, 5, and 5.5, or a range between any two of them. When 1.5 ≤ H₁+H₃ ≤ 5.5, the size of the side plate 322 and the size of the baffle plate 323 are both within a reasonable range, which can not only ensure a high injection efficiency of the electrolyte, but also prevent the baffle plate 323 from excessively squeezing the winding core 22 or prevent the separator from blocking the liquid outlet 3221.

In some embodiments, the maximum size of the cavity 324, the distance between the top cover sheet 31 and the winding core 22, and the maximum size of the baffle plate 323 satisfy: H₁+H₃ ≤ H₂.

In the embodiments of the present application, the value of H₁+H₃ is less than or equal to the distance between the side of the top cover sheet 31 facing the lower insulating member 32 and the side of the winding core 22 facing the lower insulating member 32. In this case, the baffle plate 323 is located between the body 321 and the winding core 22, and abuts against the winding core 22 at a maximum limit position. This can avoid the side plate 322 and the baffle plate 323 from affecting the structure of the winding core 22, and also avoid the separator of the winding core 22 from blocking the liquid outlet 3221, so as to ensure a high injection efficiency in the battery.

In some embodiments, the secondary battery has a second direction X intersecting with the first direction Z. The top cover assembly 3 further includes a terminal post 33, and a part of the terminal post 33 protrudes from a side of the body 321 away from the top cover sheet 31. The lower insulating member 32 further includes an explosion-proof valve boss 325, which is connected to the side of the body 321 away from the top cover sheet 31. Along the second direction X, the side plate 322 is disposed between the explosion-proof valve boss 325 and the terminal post 33, and the liquid outlet 3221 is disposed towards the terminal post 33 or the explosion-proof valve boss 325.

In the embodiments of the present application, the tabs 21 are generally disposed on both sides of the side plate 322 along a third direction Y. In this case, by providing the liquid outlet 3221 towards the terminal post 33 or the explosion-proof valve boss 325, the electrolyte flows out from the liquid outlet 3221 towards the terminal post 33 or the explosion-proof valve boss 325. A gap exists between the terminal post 33 and the liquid outlet 3221, and a gap exists between the explosion-proof valve boss 325 and the liquid outlet 3221, so that the electrolyte can flow out smoothly. In addition, this can avoid the electrolyte flowing out of the liquid outlet 3221 from directly impacting the tab 21, and prevent a short circuit formed when the tab 21 passes through the liquid outlet 3221 and lap-joins the top cover sheet, and can also protect the stability of the welding connection between the tab 21 and an adapter sheet.

In some embodiments, the secondary battery has the third direction Y intersecting with the first direction Z and the second direction X, respectively. The tab 21 is electrically connected to the terminal post 33, and along the third direction Y, and the tab 21 is disposed on a side of the side plate 322 away from the cavity 324.

In the embodiments of the present application, by arranging the tab 21 on the side of the side plate 322 away from the cavity 324, the side plate 322 can laterally block and disturb the electrolyte flow, so that the electrolyte flows out towards the liquid outlet 3221. This prevents the electrolyte from directly impacting the tab 21. By making the side plate 322 isolate the tab 21 from the cavity 324, the tab 21 is prevented from entering the cavity 324 through the liquid outlet 3221 and further falling into the second liquid-injection hole 3211 to lap-join the top cover sheetto form a short circuit. This further avoids the damage to the welding relationship between the tab 21 and the adapter sheet.

In some embodiments, the side plate 322 has a plurality of liquid outlets 3221, and the plurality of liquid outlets 3221 are disposed at intervals along a circumferential direction of the side plate 322.

In the embodiments of the present application, by arranging the plurality of liquid outlets 3221 that are spaced apart each other, it enables the plurality of liquid outlets 3221 to shunt electrolyte from different directions simultaneously, providing multiple outlets for the electrolyte, and further improving the injection efficiency of the electrolyte.

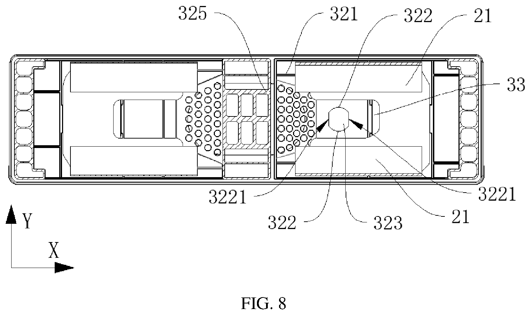

In some embodiments, as shown in FIG. 8, the side plate 322 has two liquid outlets 3221, one of the two liquid outlets 3221 is disposed towards the terminal post 33, and the other of the two liquid outlets 3221 is disposed toward the explosion-proof valve boss 325.

In the embodiments of the present application, only two liquid outlets 3221 may be disposed, where one of the two liquid outlets 3221 is disposed towards the terminal post 33 and spaced apart from the terminal post 33, and the other liquid outlet 3221 is disposed towards the explosion-proof valve boss 325 and spaced apart from the explosion-proof valve boss. In this case, the electrolyte flows out from the two liquid outlets 3221 respectively. On the basis of preventing the separator folding, this ensures a high injection efficiency in the secondary battery on the one hand, and defines the orientation of the liquid outlets 3221 on the other hand. This enables the liquid outlet 3221 not to be opposite to the tabs 21, and the side plate 322 can be utilized to effectively isolate the tabs 21, so as to prevent the tabs 21 from falling into the second liquid-injection hole 3211 through the liquid outlet 3221 and causing a short circuit due to overlapping with the top cover sheet 31.

In some embodiments, along the first direction Z, the liquid outlet 3221 penetrates through the side plate 322.

In the embodiments of the present application, it is arranged that the liquid outlet 3221 penetrates through the side plate 322 along the first direction Z. This can ensure, as much as possible, that the liquid outlet 3221 has a relatively large size along the first direction Z, so as to ensure that the electrolyte flows out of the liquid outlet 3221 quickly, improve the injection efficiency, and meanwhile prevent electrolyte accumulation at the junction between the side plate 322 and the baffle plate 323.

In some embodiments, a side surface of the baffle plate 323 facing the second liquid-injection hole 3211 is one of a flat surface, an arc surface protruding towards the second liquid-injection hole 3211, and a conical surface protruding towards the second liquid-injection hole 3211.

In the embodiments of the present application, the side surface of the baffle plate 323 facing the second liquid-injection hole 3211 may be a flat surface, and further the baffle plate 323 has an overall flat-plate structure. This can ensure that the baffle plate 323 occupies as little space as possible between the winding core 22 and the top cover sheet 31, providing sufficient dimensional space for the cavity 324 to buffer the electrolyte. Meanwhile, the flat-plate structure can also avoid the electrolyte from accumulating in the cavity 324.

In the embodiments of the present application, the side surface of the baffle plate 323 facing the second liquid-injection hole 3211 may be an arc surface protruding towards the second liquid-injection hole 3211. The electrolyte can flow obliquely along the arc surface in a direction away from the second liquid-injection hole 3211, which can directly redirect the electrolyte, facilitate rapid outflow of the electrolyte from the liquid outlet 3221, and prevent the electrolyte from accumulating in the cavity 324.

In the embodiments of the present application, the side surface of the baffle plate 323 facing the second liquid-injection hole 3211 may be a conical surface protruding towards the second liquid-injection hole 3211. The apex of the conical surface is opposite to the second liquid-injection hole 3211, which can further reduce the blocking of the conical surface to the electrolyte, enabling the electrolyte to flow under the guidance of the conical surface. This improves the injection efficiency through the liquid outlet 3221, and prevents the electrolyte from accumulating on the baffle plate 323 and in the cavity 324.

Correspondingly, the embodiments of the present application further provide a battery pack, including the secondary battery as described in any one of the aforementioned embodiments.

It can be understood that the battery pack according to the embodiments of the present application includes all the technical features and all the technical effects of the aforementioned secondary battery, which will not be repeated herein.

The embodiments of the present application further provide an electrical device, including the secondary battery as described in any one of the aforementioned embodiments, or the battery pack as described in the aforementioned embodiment.

It can be understood that the electrical device according to the embodiments of the present application includes all the technical features and all the technical effects of the aforementioned secondary battery or battery pack, which will not be repeated herein.

Certainly, the electrical device referred to in the present application can be an application device such as a vehicle, a mobile phone, a portable device, a laptop computer, a ship, a spacecraft, an electric toy and an electric tool. The vehicle can be a new energy vehicle, and the new energy vehicle can be a pure electric vehicle, a hybrid vehicle or an extended-range vehicle, etc. The spacecraft includes an airplane, a rocket, a space shuttle, and a spaceship etc. The electric toy include a stationary electric toy or a mobile electric toy, such as a game console, an electric vehicle toy, an electric ship toy, and an electric airplane toy, etc. The electric tool includes a metal-cutting electric tool, a grinding electric tool, an assembly electric tool and a railway electric tool, such as an electric drill, an electric grinder, an electric wrench, an electric screwdriver, an electric hammer, an impact electric drill, a concrete vibrator and an electric planer, etc. The electrical device described above is not specially limited in the embodiments of the present application.

The secondary battery of the present application is specifically described hereinafter in combination with specific embodiments.

### Example 1

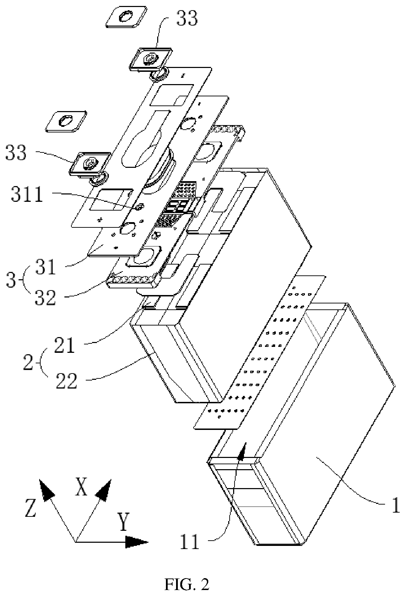

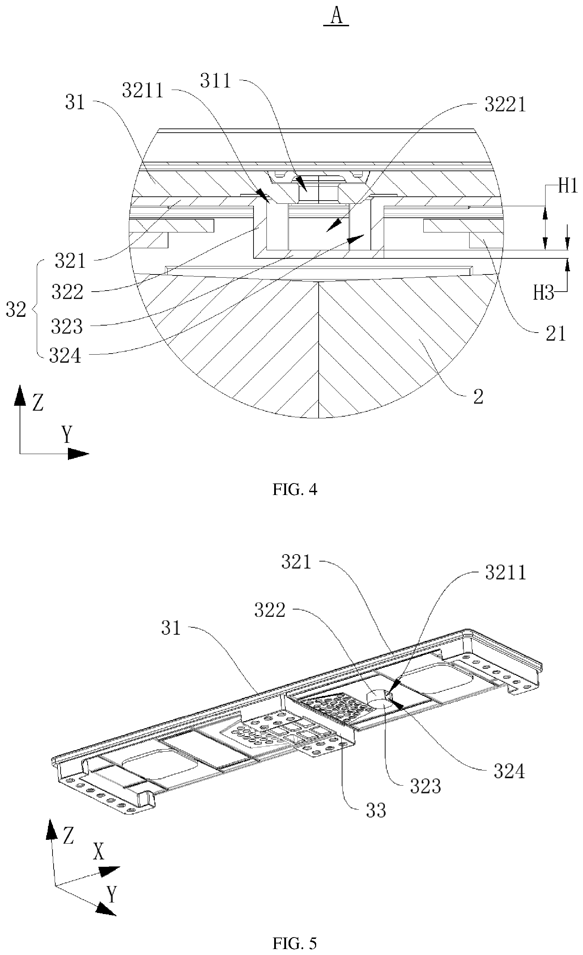

The present example provides a secondary battery including the side plate 322 and the baffle plate 323 as shown in FIG. 4, and the maximum size of the cavity 324 enclosed by the side plate 322 and the baffle plate 323 is 3 mm. The maximum distance between the side of the top cover sheet 31 adjacent to the lower insulating member 32 and the side of the winding core 22 adjacent to the lower insulating member 32 is 5 mm, and the maximum size of the baffle plate 323 is 0.6 mm. The overall structure of the secondary battery is shown in FIG. 1 and FIG. 2, where the liquid outlet 3221 is provided in the side plate 322, and the flow passage area of the liquid outlet and the outer surface area of the side plate satisfy: 0.06 ≤ S₁/S₂ ≤ 2. The specific structural size parameters are shown in Table 1.

### Examples 2 - 10

Each example provides a secondary battery, the specific structure of which is roughly the same as the structure of the secondary battery in Example 1, except that the value of the flow passage area of the liquid outlet 3221 satisfies: 12 ≤ S₁ ≤ 100, and the value of the outer surface area of the side plate 322 satisfies: 50 ≤ S₂ ≤ 200, which satisfy: 0.06 ≤ S₁/S₂ ≤ 2; the maximum size of the cavity 324 has different values, and the maximum size of the baffle plate 323 has different values.

### Examples 11 - 14

Each example provides a secondary battery, the specific structure of which is roughly the same as the structure of the secondary battery in Example 1, except that the flow passage area of the liquid outlet 3221 is 40 mm², the outer surface area of the side plate 322 is 100 mm², the maximum size of the baffle plate 323 is 0.5 mm, the value of the maximum size of the cavity 324 satisfies: 1 ≤ H₁ ≤ 5, and the value of the distance between the side of the top cover sheet 31 adjacent to the lower insulating member 32 and the side of the winding core 22 adjacent to the lower insulating member 32 satisfies: 2 ≤ H₂ ≤ 7, which satisfy: 0.14 ≤ H₁/H₂ ≤ 2.5.

### Examples 15 - 17

Each example provides a secondary battery, the specific structure of which is roughly the same as the structure of the secondary battery in Example 1, except that the flow passage area of the liquid outlet 3221 is 40 mm², the outer surface area of the side plate 322 is 100 mm², and the distance between the side of the top cover sheet 31 adjacent to the lower insulating member 32 and the side of the winding core 22 adjacent to the lower insulating member 32 is 5 mm; the maximum size of the cavity 324 has different values, and the maximum size of the baffle plate 323 has different values.

### Comparative Examples 1 - 3

Each comparative example provides a secondary battery, the specific structure of which is roughly the same as the structure of the secondary battery in Example 1, except that the flow passage area of the liquid outlet 3221 and the outer surface area of the side plate 322 fail to satisfy the range of 0.06 ≤ S₁/S₂ ≤ 2; the value of the maximum size of the cavity 324, as well as the value of the distance between the side of the top cover sheet 31 adjacent to the lower insulating member 32 and the side of the winding core 22 adjacent to the lower insulating member 32 fail to satisfy: 0.14 ≤ H₁/H₂ ≤ 2.5; and the value of the maximum size of the baffle plate 323 mostly falls out of the range of 0.5 ≤ H₃ ≤ 0.7.

The specific experimental test methods are as follows.

Separator folding: after the secondary battery is manufactured, the secondary battery is disassembled; the electrode assembly 2 is unfolded during the disassembly process; and it is observed whether the separator folding occurs inside the electrode assembly.

Electrolyte injection efficiency: a secondary battery in the examples of the present application is placed into a liquid-injection machine; firstly, the interior of the secondary battery is vacuumed by the liquid-injection machine, so that the air pressure inside the secondary battery is below -90 Kpa, and at this moment, the electrolyte has been stored in an injection cup. Since the interior of the secondary battery is in a negative-pressure state, the electrolyte flows to the interior of the secondary battery. Then, the liquid-injection machine performs alternating positive-and-negative pressure cycles on the secondary battery (positive pressure of 180 Kpa for 30-60 s, negative pressure of -60 Kpa for 3-15 s, for 4-12 cycles), so that the electrolyte can be fully injected into the secondary battery. The time required for the overall liquid injection process is t1 min. The same liquid injection operation is carried out on the secondary battery of the same specification without the side plate 322 and the baffle plate 323, and the time required for the overall liquid injection process is recorded as t2 min. When t1/t2 ≥ 98%, it means that the injection efficiency meets the requirements.

Whether the baffle plate is qualified: the lower insulating member is generally molded by integrated injection; when the maximum size of the baffle plate 323 is less than 0.5 mm, the appearance defects such as notches or shrinkage will occur during the production of the baffle plate 323, so the baffle plate 323 is unqualified; when the maximum size of the baffle plate 323 is greater than or equal to 0.5 mm, the baffle plate 323 is qualified. For the lower insulating member that can be produced normally, the dimension thereof can be directly measured using a dimensional measurement tool (such as a vernier caliper, etc.). The baffle plate with excessively large size will occupy the space between the top cover sheet and the electrode assembly, and then squeeze the space of the cavity, which is not conducive to improving the injection efficiency.

**Table 1**

| Item | S₁ (mm²) | S₂ (mm²) | S₁/ S₂ | H₁ (mm) | H₂ (mm) | H₁/ H₂ | H₃ (mm) | Whether the separator is folded | Injection efficiency | Whether the baffle plate is qualified |
|---|---|---|---|---|---|---|---|---|---|---|
| Example 1 | 12 | 50 | 0.24 | 3 | 5 | 0.6 | 0.6 | No | 98.20% | Yes |
| Example 2 | 12 | 200 | 0.06 | 3 | 5 | 0.6 | 0.6 | No | 98.04% | Yes |
| Example 3 | 100 | 50 | 2 | 3 | 5 | 0.6 | 0.6 | No | 99.30% | Yes |
| Example 4 | 100 | 200 | 0.5 | 3 | 5 | 0.6 | 0.6 | No | 98.90% | Yes |
| Example 5 | 20 | 50 | 0.4 | 3 | 5 | 0.6 | 0.6 | No | 98.80% | Yes |
| Example 6 | 20 | 150 | 0.13 | 3 | 5 | 0.6 | 0.6 | No | 98.01% | Yes |
| Example 7 | 60 | 50 | 1.2 | 3 | 5 | 0.6 | 0.6 | No | 98.90% | Yes |
| Example 8 | 60 | 150 | 0.4 | 3 | 5 | 0.6 | 0.6 | No | 98.80% | Yes |
| Example 9 | 40 | 100 | 0.4 | 3 | 5 | 0.6 | 0.6 | No | 98.90% | Yes |
| Example 10 | 40 | 200 | 0.2 | 4.1 | 5 | 0.82 | 0.5 | No | 99.50% | Yes |
| Example 11 | 40 | 100 | 0.4 | 1 | 2 | 0.5 | 0.5 | No | 98.70% | Yes |
| Example 12 | 40 | 100 | 0.4 | 1 | 7 | 0.14 | 0.5 | No | 98.50% | Yes |
| Example 13 | 40 | 100 | 0.4 | 5 | 2 | 2.5 | 0.5 | No | 98.90% | Yes |
| Example 14 | 40 | 100 | 0.4 | 5 | 7 | 0.71 | 0.5 | No | 99.60% | Yes |
| Example 15 | 40 | 100 | 0.4 | 3 | 5 | 0.6 | 0.5 | No | 98.90% | Yes |
| Example 16 | 40 | 100 | 0.4 | 4.1 | 5 | 0.82 | 0.7 | No | 99.55% | Yes |
| Example 17 | 40 | 100 | 0.4 | 4.1 | 5 | 0.82 | 0.6 | No | 99.55% | Yes |
| Comparative Example 1 | 5 | 250 | 0.02 | 0.5 | 8 | 0.06 | 1 | No | 96.05% | Yes |
| Comparative Example 2 | 150 | 40 | 3.75 | 0.5 | 8 | 0.06 | 0.5 | Yes | 96.25% | Yes |
| Comparative Example 3 | 150 | 40 | 3.75 | 6 | 1 | 6 | 0.3 | Since the baffle plate is unqualified, it cannot be measured. | Since the baffle plate is unqualified, it cannot be measured. | No |

It can be seen from Table 1 that the secondary batteries in Examples 1-17 all satisfy the range of 0.06 ≤ S₁/S₂ ≤ 2, which meets the requirements of preventing separator folding and improving injection efficiency. By comparing Examples 1-17 and Comparative Examples 1-3, it can be seen that when S₁ is excessively small or S₂ is excessively large, the injection efficiency of the electrolyte will be reduced, which is not conducive to improving production efficiency.

When S₁ is excessively large or S₂ is excessively small, it may cause the side plate to break, and the baffle plate may shift, resulting in the risk of the separator folding. It can be seen from Examples 11-14 that the secondary battery further satisfies 0.14 ≤ H₁/H₂ ≤ 2.5 when it satisfies the range of 0.06 ≤ S₁/S₂ ≤ 2. Under this range, by ensuring the size of the cavity, the cavity provides a better buffering effect, and the injection efficiency of the secondary battery can be further improved while preventing the separator folding.

It can be seen from Examples 15-17 that 0.5 ≤ H₃ ≤ 0.7 is further satisfied when 0.06 ≤ S₁/S₂ ≤ 2 and 0.14 ≤ H₁/H₂ ≤ 2.5 are satisfied. In this case, it can not only ensure the normal assembly and fitting of the secondary battery and avoid squeezing the electrode components, and but also lead to high injection efficiency. None of Comparative Example 1 to Comparative Example 3 satisfy the range of 0.06 ≤ S₁/S₂ ≤ 2, nor do they meet the range of 0.14 ≤ H₁/ H₂ ≤ 2.5. Although the separator is not folded in Comparative Example 1, the injection efficiency is low; and the separator is folded in the Comparative Example 2. H₃ fails to satisfy 0.5 ≤ H₃ ≤ 0.7 in Comparative Example 1; and in this case, H₃ is excessively large, which will cause the space occupation of the cavity. In Comparative Example 3, excessively small H₃ leads to an embarrassing situation that the lower insulating member cannot be produced, making it impossible to measure the corresponding injection efficiency and determine whether the separator is folded.

In the above embodiments, each embodiment is described with its own emphasis. The parts of an embodiment that are not described in detail can refer to the relevant descriptions of other embodiments.

The above provides a detailed introduction to the secondary battery, the battery pack and the electrical device according to the embodiments of the present application, and the principle and implementation method of the present application are illustrated by applying specific examples. The above description of the embodiments is merely intended to facilitate understanding of the technical solutions and the core concept of the present application. It should be understand by those skilled in the art that they may still amend the technical solutions recorded in the aforementioned embodiments, or replace equivalently some or all of the technical features therein. These amendments or replacements do not cause the essence of the corresponding technical solutions to depart from the scope of the technical solutions of the embodiments of the present application.

## Claims

1. A secondary battery, comprising:
a housing, having an accommodating cavity;
an electrode assembly, disposed in the accommodating cavity; and
a top cover assembly, comprising:
a top cover sheet, connected with the housing, and covering and sealing the accommodating cavity, wherein the top cover sheet has a first liquid-injection hole; and
a lower insulating member, connected to a side of the top cover sheet facing the electrode assembly;
wherein the lower insulating member comprises:
a body, connected with the top cover sheet, wherein the body is provided with a second liquid-injection hole being in communication with the first liquid-injection hole;
a side plate, connected to a side of the body away from the top cover sheet; and
a baffle plate, connected to a side of the side plate away from the body, wherein the baffle plate is disposed between the second liquid-injection hole and the electrode assembly, the side plate has a liquid outlet, and the liquid outlet is in communication with the second liquid-injection hole;
wherein a flow passage area of the liquid outlet is S₁ mm², and an outer surface area of the side plate is S₂ mm², satisfying 0.06 ≤ S₁/S₂ ≤ 2.

2. The secondary battery according to claim 1, further satisfying: 0.2 ≤ S₁/S₂ ≤ 0.4.

3. The secondary battery according to claim 1, wherein
the flow passage area of the liquid outlet satisfies: 12 ≤ S₁ ≤ 100; and/or,
the outer surface area of the side plate satisfies: 50 ≤ S₂ ≤ 200.

4. The secondary battery according to claim 1, wherein
the flow passage area of the liquid outlet satisfies: 20 ≤ S₁ ≤ 60; and/or,
the outer surface area of the side plate satisfies: 50 ≤ S₂ ≤ 150.

5. The secondary battery according to claim 1, wherein the secondary battery has a first direction, and the electrode assembly and the top cover assembly are disposed along the first direction; the electrode assembly comprises a winding core and a tab, the tab and the winding core are electrically connected, and the tab is disposed on a side of the winding core facing the top cover sheet; a cavity is enclosed by the baffle plate and the side plate, and the cavity is communicated with the liquid outlet and the second liquid-injection hole respectively; along the first direction, a maximum size of the cavity is H₁ mm, and a maximum distance between a side of the top cover sheet adjacent to the lower insulating member and a side of the winding core adjacent to the lower insulating member is H₂ mm, satisfying 0.14 ≤ H₁/H₂ ≤ 2.5.

6. The secondary battery according to claim 5, wherein
the maximum size of the cavity satisfies: 1 ≤ H₁ ≤ 5; and/or,
the maximum distance between the side of the top cover sheet adjacent to the lower insulating member and the side of the winding core adjacent to the lower insulating member satisfies: 2 ≤ H₂ ≤ 7.

7. The secondary battery according to claim 6, wherein along the first direction, a maximum size of the baffle plate is H₃ mm, satisfying: 0.5 ≤ H₃ ≤ 0.7.

8. The secondary battery according to claim 7, wherein the maximum size of the cavity, the maximum distance between the side of the top cover sheet adjacent to the lower insulating member and the side of the winding core adjacent to the lower insulating member, and the maximum size of the baffle plate further satisfy: H₁+H₃ ≤ H₂.

9. The secondary battery according to claim 5, wherein
the secondary battery has a second direction intersecting with the first direction;
the top cover assembly further comprises a terminal post, and a part of the terminal post protrudes from the side of the body away from the top cover sheet; and
the lower insulating member further comprises an explosion-proof valve boss, and the explosion-proof valve boss is connected to the side of the body away from the top cover sheet; along the second direction, the side plate is disposed between the explosion-proof valve boss and the terminal post (33), and the liquid outlet is disposed towards the terminal post or the explosion-proof valve boss.

10. The secondary battery according to claim 9, wherein the secondary battery has a third direction intersecting with the first direction and the second direction respectively, the tab is electrically connected to the terminal post, and along the third direction, the tab is disposed on a side of the side plate away from the cavity.

11. The secondary battery according to claim 9, wherein the side plate has a plurality of liquid outlets, and the plurality of liquid outlets are disposed at intervals along a circumferential direction of the side plate; along the first direction, the liquid outlet penetrates the side plate.

12. The secondary battery according to claim 11, wherein the side plate has two liquid outlets, one of the two liquid outlets is disposed towards the terminal post, and the other of the two liquid outlets is disposed towards the explosion-proof valve boss.

13. The secondary battery according to claim 1, wherein a side surface of the baffle plate facing the second liquid-injection hole is one of a flat surface, an arc surface protruding towards the second liquid-injection hole, and a conical surface protruding towards the second liquid-injection hole.

14. A battery pack, comprising the secondary battery according to any one of claims 1-13.

15. An electrical device, comprising the secondary battery according to any one of claims 1-13, or the battery pack according to claim 14.
